# FASCICULE DE BREVET EUROPEEN

(11) **EP 3 956 588 B1**
(45) Date de publication et mention de la délivrance du brevet: **10.05.2023**
(21) Numéro de dépôt: 20718673.5
(22) Date de dépôt: 16.04.2020
(51) Int. Cl.: F16K 7/04, F16K 7/06, F16K 11/16, B67D 3/04, B01F 35/71

(54) **MODULE DE VANNE À ACTIONNEUR ÉLECTRIQUE INTÉGRÉ ET DISPOSITIF AUTOMATISÉ DE PRÉPARATION DE MÉLANGES COMPORTANT AU MOINS UN TEL MODULE**
VENTILMODUL MIT EINGEBAUTEM ELEKTRISCHEM AKTUATOR UND AUTOMATISCHE GEMISCHAUFBEREITUNGSVORRICHTUNG MIT MINDESTENS EINEM SOLCHEN MODUL
VALVE MODULE WITH INBUILT ELECTRIC ACTUATOR, AND AUTOMATED MIXTURE-PREPARATION DEVICE COMPRISING AT LEAST ONE SUCH MODULE

(30) Priorité: 18.04.2019 FR 1904165; 18.04.2019 FR 1904163
(43) Date de publication de la demande: 23.02.2022
(73) Titulaire: Assistance Et Service Specialise En Innovation Scientifique Et Technique (Societe A Responsabilite Limitee), 67000 Strasbourg (FR)
(72) Inventeur: NEIMARK, Jean, 67000 STRASBOURG (FR)
(74) Mandataire: Cabinet Nuss
(86) Numéro de dépôt international: PCT/EP2020/060758
(87) Numéro de publication internationale: WO 2020/212520

(56) Documents cités:
- EP-A2- 3 165 241
- CH-A1- 707 421
- CN-A- 104 989 844
- GB-A- 2 274 326
- JP-A- 2015 021 520
- US-A- 5 113 906
- US-A1- 2010 064 900

## Description

La présente invention concerne les technologies de contrôle et de régulation fluidiques, notamment de gaz, de liquides et/ou de substances semi-liquides ou visqueuses, en particulier dans des réseaux de circulation fluidique complexes, et notamment en relation avec la réalisation de mélanges de produits multiples, et a pour objet un module de vanne à actionneur électrique intégré et un dispositif automatisé de préparation de mélanges comportant au moins un tel module.

Dans le domaine des vannes et des organes de contrôle et de régulation fluidiques similaires, l'homme du métier connaît déjà de multiples réalisations, pour la plupart dédiées à un type de fluide (liquide, gaz, ...) et à un nombre limité de situations de mise en oeuvre et d'applications. En outre, ces vannes connues présentent souvent une construction complexe, encombrante et/ou avec des parties mobiles en contact direct avec le fluide. CH707421 divulgue un module de vanne selon le préambule de la revendication 1. US5113906 et GB2274326 montrent d'autres exemples de modules de vanne.

La présente invention vise à fournir un dispositif de vanne de construction simple, peu encombrant, aisé à commander, de faible coût, facile à nettoyer et adapté sensiblement à tout type de fluide liquide, gazeux ou semi-liquide.

De plus, le dispositif de came à fournir devra pouvoir contrôler simultanément le débit fluidique dans au moins deux lignes ou voies de circulation distinctes.

A cet effet, l'invention a pour objet un module de vanne à actionneur électrique intégré, ledit module comprenant, d'une part, un dispositif de vanne comportant un organe mobile dont le positionnement contrôle la circulation d'un fluide dans au moins deux lignes de circulation traversant ledit dispositif de vanne, et, d'autre part, un actionneur apte et destiné à déplacer en rotation l'organe mobile rotatoire du dispositif de vanne autour d'un axe, le dispositif de vanne comprenant un corps support dans lequel est monté ledit au moins un organe mobile précité, formant came guidée en rotation et pourvue d'au moins une surface de commande, et également au moins deux portions de conduits formant des segments locaux des lignes de circulation, ces portions de conduits et cet organe mobile étant arrangés et configurés de manière à ce que ladite au moins une surface de commande puisse venir en engagement et modifier par écrasement local les sections de passage desdites au moins deux portions de conduits, ce de manière mutuellement différenciée et en fonction de la position en rotation de l'organe mobile,
module de vanne caractérisée en ce que l'actionneur consiste en un micro-servomoteur, monté sur le corps support, l'organe mobile conservant sa position angulaire en rotation en l'absence de sollicitation active de la part dudit micro-servomoteur,
en ce que ledit dispositif est formé de deux composantes assemblées entre elles, à savoir, une composante fonctionnelle formée par le micro-servomoteur dont l'axe de sortie porte l'organe formant came rotatoire et présentant la ou les surface(s) de commande, et une composante structurelle formée par le corps support sous forme de châssis en U,
en ce que le micro-servomoteur est fixé sur les ailes du U, et
en ce que les portions de conduits, de ladite au moins une paire de portions de conduits, ont des parois élastiquement déformables, sont disposées sur ou logées dans la base du U, formant berceau, et reposent chacune contre au moins une surface perpendiculaire à la direction de la force d'écrasement exercée par la came lorsqu'elle vient en engagement avec la portion de conduite concernée.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] et [Fig. 1B] sont des schémas synoptiques et fonctionnels d'un module de vanne selon l'invention, contrôlant la circulation fluidique dans deux lignes (Fig. 1A) ou réalisant en association avec un câblage fluidique adapté un circuit fluidique équivalent à un OU exclusif (figure 1B) ;
[Fig. 2A], [Fig. 2B] et [Fig. 2C] sont des vues en élévation latérale et partiellement en coupe d'un module de vanne double selon un premier mode de réalisation de l'invention, les figures illustrant trois positions différentes du module de vanne (Fig. 2A : voie de droite fermée ; Fig. 2B : voie de gauche fermée ; Fig. 2C : les deux voies fermées) ;
[Fig. 2D] est une vue en perspective de l'objet de la figure 2B ;
[Fig. 3A], [Fig. 3B] et [Fig. 3C] sont des vues similaires à celles des figures 2A à 2C d'une première variante d'un deuxième mode de réalisation sous forme d'un module de vanne double (avec les trois positions successives : Fig. 3A = voie de gauche fermée ; Fig. 3B = les deux voies fermées ; Fig. 3C = voie de droite fermée) ;
[Fig. 4A], [Fig. 4B] et [Fig. 4C] sont des vues de dessous de l'organe mobile formant came du module des figures 3, illustré respectivement dans les trois positions successives des figures 3A à 3C ;
[Fig. 5A], [Fig. 5B] et [Fig. 5C] sont des vues similaires à celles des figures 3A à 3C d'une seconde variante du deuxième mode de réalisation sous forme d'un module de vanne quadruple à deux cames (ou de deux modules de vanne double superposés), illustré dans différentes positions de commande ;
[Fig. 5D] et [Fig. 5E] sont des vues de dessus de l'organe mobile formant came double du module des figures 5A et 5B, illustré respectivement dans les deux positions ressortant de ces figures ;
[Fig. 6A] et [Fig. 6B] sont des vues en perspective des organes mobiles formant came(s) des modules des figures 3 et 5 respectivement ;
[Fig. 7] est une vue en coupe d'une unité de contrôle fluidique selon l'invention intégrant fonctionnellement trois modules de vanne tels que représentés figures 3 ;
[Fig. 8A] et [Fig. 8B] sont des vues éclatées respectivement des modules de vanne des figures 3 et 5 ;
[Fig. 9] est un schéma fluidique simplifié illustrant un dispositif automatisé de préparation de mélanges selon un premier mode de réalisation de l'invention ;
[Fig. 10] est un schéma fluidique partiel illustrant un sous-ensemble fonctionnel de dosage pouvant être mis en oeuvre dans le cadre d'un dispositif automatisé de préparation de mélanges selon une variante du premier mode de réalisation ;
[Fig. 11] est un schéma fluidique d'un dispositif automatisé de préparation de mélanges selon une première variante d'un second mode de réalisation de l'invention ;
[Fig. 12] est un schéma synoptique d'une possible construction pratique du dispositif illustré figure 11 ;
[Fig. 13] est un schéma fluidique d'un dispositif automatisé de préparation de mélanges selon une deuxième variante (à trois réceptacles) du second mode de réalisation de l'invention ;
[Fig. 14] est un schéma de principe illustrant une possible construction pratique du dispositif de la figure 13 ;
[Fig. 15] est un schéma fluidique d'un dispositif automatisé de préparation de mélanges selon une troisième variante de réalisation (à cinq réceptacles) du second mode de réalisation de l'invention ;
[Fig. 16] est un schéma fluidique simplifié d'une alternative de raccordement fluidique permettant la réalisation de cinq mélanges par un dispositif tel que représenté figures 13 et 14 ;
[Fig. 17] est un schéma fluidique partiel illustrant une architecture de dispositif automatisé en accord avec une évolution du dispositif représenté figure 15 ;
[Fig. 18] est une vue de détail schématique d'un réceptacle avec son couvercle faisant partie de l'un quelconque des dispositifs représentés aux figures 11, 13, 14, 15, 16 et 17, selon un premier mode de réalisation ;
[Fig. 19] est une vue en coupe d'un couvercle pour un réceptacle tel que représenté figure 18, selon un autre mode de réalisation ;
[Fig. 20A] et [Fig. 20B] sont des vues de dessus de deux variantes du second mode de réalisation d'un couvercle tel que représenté figure 19 ;
[Fig. 21A] et [Fig. 21B] sont des représentations schématiques de deux variantes de réalisation d'ensembles [réservoirs pré-dosés - rampe de distribution] faisant partie du dispositif selon l'invention, à titre de consommables ;

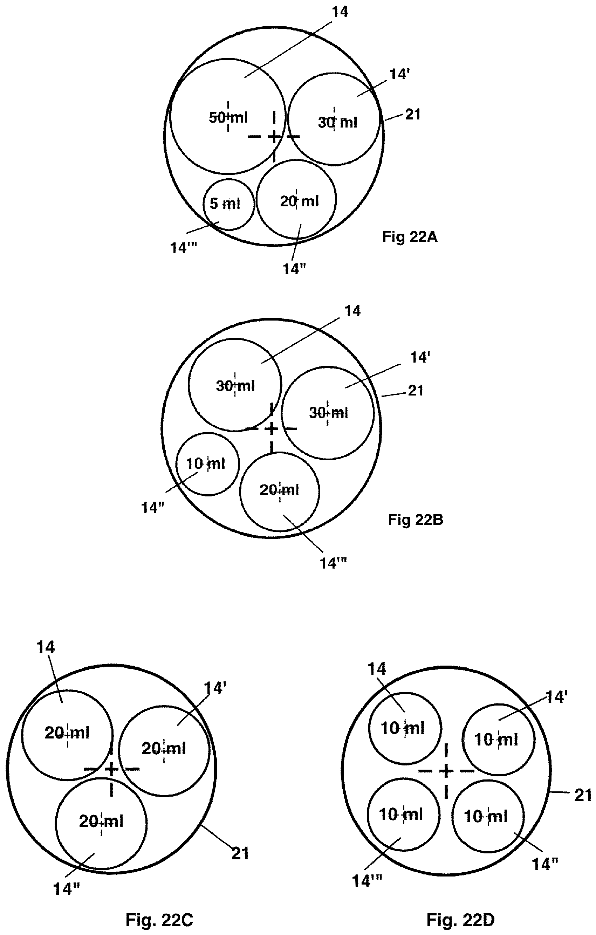

[Fig. 22A], [Fig. 22B], [Fig. 22C] et [Fig. 22D] sont des vues schématiques en coupe transversale d'ensembles pré-conditionnés (sous forme de cartouches cylindriques) de réservoirs pré-dosés de produits de base (par exemple sous forme de corps de seringues, pré-remplis de doses de substances liquides alimentaires pour réaliser un cocktail), faisant partie du dispositif selon l'invention à titre de consommables ;
[Fig. 23] est une vue en perspective d'un module de vanne selon un autre mode de réalisation de l'invention, en configuration d'utilisation ;
[Fig. 24A] et [Fig. 24B] sont des vues en perspective (23A) et en élévation (23B) du module représenté figure 23, ce dans une configuration autorisant la mise en place ou l'enlèvement des portions de conduits dont les passages sont contrôlés ;
[Fig. 25] est une vue en perspective du module de la figure 23 lors de l'enlèvement ou de la mise en place d'un élément de verrouillage ;
[Fig. 26A] à [Fig. 26E] sont des vues schématiques similaires à celles des figures 1A et 1B illustrant un autre mode de réalisation d'une came d'un module de vanne selon l'invention, ce dans cinq positions rotatoires différentes de la came correspondant à quatre états de circulation différents dans la paire de portions de conduits dont les passages sont contrôlés, et,
[Fig. 27] est un schéma fluidique, similaire à ceux des figures 9, 13 et 15, illustrant un autre mode de réalisation d'un dispositif automatisé de préparation de mélanges liquides selon l'invention, mettant en oeuvre des modules de vannes et une unité de contrôle fluidique selon l'invention.

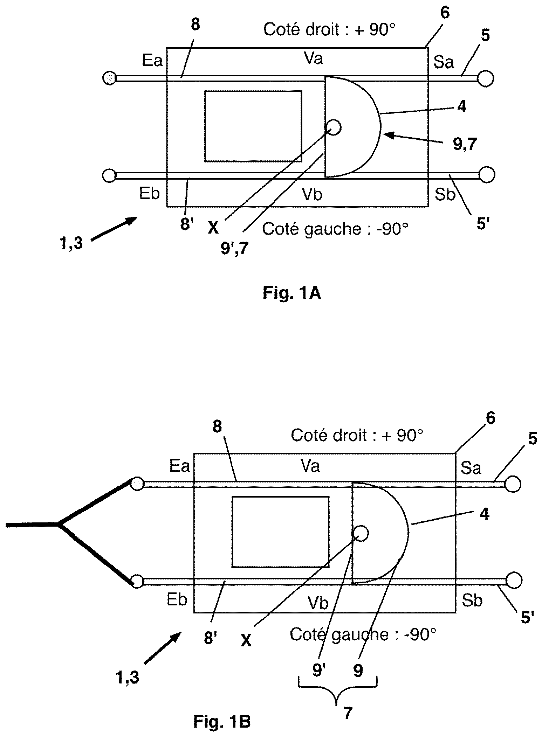

Les figures 1 à 5, 8 et 23 à 26 illustrent toutes, sous forme fonctionnelle ou structurelle, un module de vanne 1 à actionneur électrique 2 intégré. Ce module comprend, d'une part, un dispositif de vanne 3 comportant un organe mobile 4 dont le positionnement contrôle la circulation d'un fluide dans au moins deux lignes de circulation 5, 5' traversant ledit dispositif de vanne 3, et, d'autre part, un actionneur 2 apte et destiné à déplacer en rotation l'organe mobile rotatoire 4 du dispositif de vanne 3 autour d'un axe X.

Ce dispositif de vanne 3 comprend un corps support 6 dans lequel est monté ledit au moins un organe mobile 4 précité, formant came guidée en rotation et pourvue d'au moins une surface de commande 7, 7', et également au moins deux portions de conduits 8, 8' formant des segments locaux des lignes de circulation 5, 5', ces portions de conduits 8, 8' et cet organe mobile 4 étant arrangés et configurés de manière à ce que ladite au moins une surface de commande 7, 7' vienne sélectivement en engagement et modifie par écrasement local les sections de passage desdites au moins deux portions de conduits 8, 8', ce de manière mutuellement différenciée, et le cas échéant interdépendante, et en fonction de la position en rotation de l'organe mobile 4.

Conformément à l'invention, l'actionneur 2 consiste en un micro-servomoteur, monté sur le corps support 6, l'organe mobile 4 conservant sa position angulaire en rotation en l'absence de sollicitation active de la part dudit micro-servomoteur 2. De plus, ledit dispositif 1 est formé de deux composantes assemblées entre elles, à savoir, une composante fonctionnelle formée par le micro-servomoteur 2 dont l'axe de sortie porte l'organe formant came 4 rotatoire et présentant la ou les surface(s) de commande 7, 7', et une composante structurelle formée par le corps support 6 sous forme de châssis en U, le micro-servomoteur 2 étant fixé sur les ailes 6' du U. Enfin, les portions de conduits 8, 8', de ladite au moins une paire de portions de conduits, ont des parois élastiquement déformables, sont disposées sur ou logées dans la base 6" du U, formant berceau, et reposent chacune contre au moins une surface 60, 60', 60" perpendiculaire à la direction de la force d'écrasement exercée par la came 4 lorsqu'elle vient en engagement avec la portion de conduite concernée 8, 8'.

Grâce aux dispositions de l'invention, notamment la mise en oeuvre d'un micro-servomoteur 2 en tant qu'actionneur commandable monté directement sur un dispositif de micro-vanne 3 assemblé et configuré à cet effet, il est possible de fournir un dispositif de régulation des débits simultanément dans au moins deux lignes 5 et 5' de circulation fluidique distinctes, avec une contamination limitée à l'intérieur des portions de conduit 8, 8', présentant une construction simple, segmentée et peu encombrante, aisée à commander et dont la consommation énergétique est limitée.

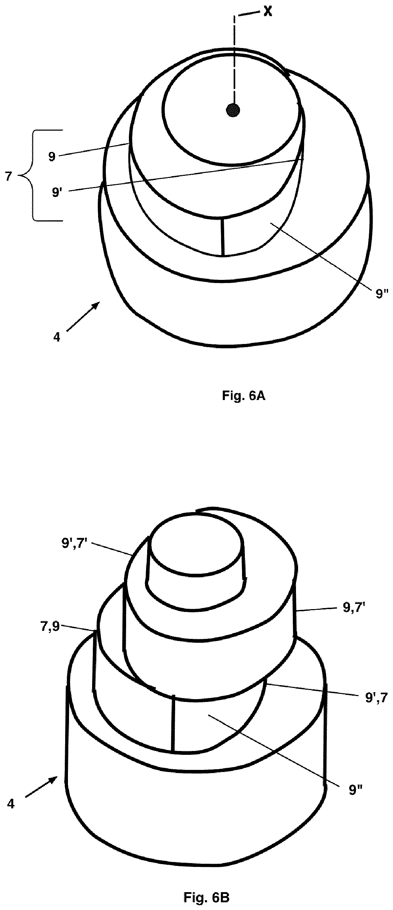

En fonction de la configuration de la surface de commande 7, 7' concernée, c'est-à-dire en fonction de la forme du profil ou contour périphérique de la came 4 en regard d'une paire de portions de conduits 8 et 8', la rotation de l'organe mobile peut provoquer des effets similaires, différenciés ou contraires sur les portions de conduit 8, 8' qui sont susceptibles d'être impactés par ladite surface 7, 7', le cas échéant en fonction de la position angulaire atteinte (cf. figures 1 à 6 et 26).

Préférentiellement, l'organe mobile 4 et la ou chaque paire de portions de conduits 8, 8' sont arrangés et configurés de telle manière que sur la plage angulaire rotatoire possible pour l'organe mobile 4 autour de l'axe X, le passage de chacune desdites portions 8, 8' puisse être totalement obturé (voie de circulation correspondante fermée) et totalement libéré (voie de circulation correspondante entièrement ouverte) dans au moins une position en rotation.

Dans le cas d'un module de vanne 1 du type normalement fermé, les au moins deux portions de conduits 8 et 8' pourront être fermées simultanément par la surface 7, 7' de came associée dans au moins une position angulaire, le cas échéant sur une plage (cf. figures 1, 2C et 3B).

Dans le cas d'un module de vanne 1 de type normalement ouvert, les au moins deux portions de conduits 8 et 8' pourront être ouvertes simultanément par absence de contact avec la surface de commande concernée dans au moins une position angulaire, le cas échéant sur une plage.

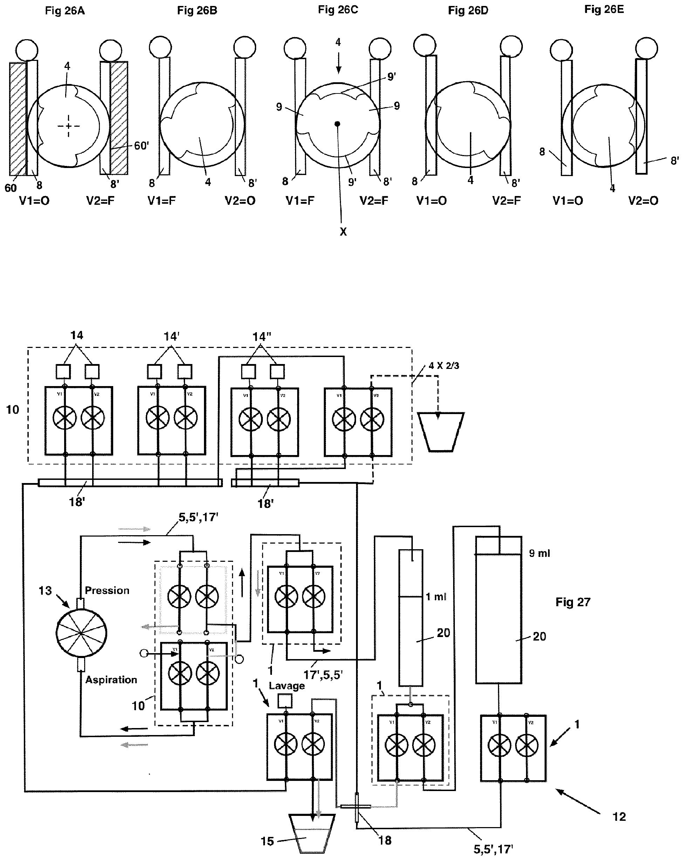

Le mode de réalisation de came 4 des figures 26 permet d'accéder à toutes les configurations pour chacune des portions de conduits 8 et 8' de la paire.

La construction de dispositif de micro-vanne double illustré sur les figures 1A et 1B comprend ainsi fonctionnellement deux micro-vannes Va et Vb arrangées en parallèle, intégrées dans le même dispositif de vanne 3 (avec un unique corps support 6) et comportant chacune une entrée Ea, Eb et une sortie Sa, Sb propres. Il en est de même pour le module de micro-vanne illustrée figures 26.

Préférentiellement, les portions de conduits 8, 8'sont arrangées par paire(s) en regard d'une surface de commande 7, 7', préférentiellement de part et d'autre de l'axe de rotation X de l'organe mobile 4 et sont montées avec un maintien calé et une extension rectiligne dans le corps support 6.

Les portions de conduits 8, 8' sont par exemple réalisées en silicone ou un matériau similaire flexible et chimiquement neutre, aisément déformable élastiquement et permettant de réaliser une étanchéité aux fluides liquides et gazeux dans un état fortement pincé (écrasement maximal par la came). De manière tout à fait préférée, ces portions de conduits, et plus généralement les lignes 5, 5' dont elles forment des sections locales à passage contrôlé, consistent en des tubes adaptées pour une utilisation dans des pompes péristaltiques, tel que par exemple le produit connu sous la dénomination Tygon S3 (nom déposé) E-LFL de la société Saint-Gobain. Pour les applications plus particulièrement envisagées dans le cadre de la présente, des diamètres internes de l'ordre du millimètre sont adaptés (par exemple de 0,5 mm à 3 mm environ). Bien entendu, les lignes 5 et 5' peuvent être constituées en totalité par le même tube que celui formant les portions de conduits 8 et 8', qui sont alors formées d'un seul tenant avec ces lignes et en constituent des segments locaux dont le passage est contrôlé par le dispositif de micro-vanne qu'elles traversent. En variante, les portions de conduits peuvent être des segments de tube spécifiques, adaptés pour une utilisation avec une came d'écrasement 4, reliés aux lignes 5 et 5' par des raccords de connexion et éventuellement intégrés à la micro-vanne elle-même.

Les différents états possibles pour le module de vanne 1 sont préférentiellement atteints par une rotation autour de l'axe X inférieure à 360°, avantageusement comprise entre 120° et 270°, préférentiellement d'environ 180°, de l'organe mobile 4.

Le micro-servomoteur 2 préférentiellement mis en oeuvre dans le cadre de l'invention et asservi en position rotatoire, intègre une électronique de commande et un engrenage de démultiplication, et est par exemple du type connu sous la désignation Tower Pro (nom déposé) Micro Servo SG90. La commande de ce type de servomoteur de faible taille peut être effectuée directement par une unité de commande 16 électronique, sans interface de puissance.

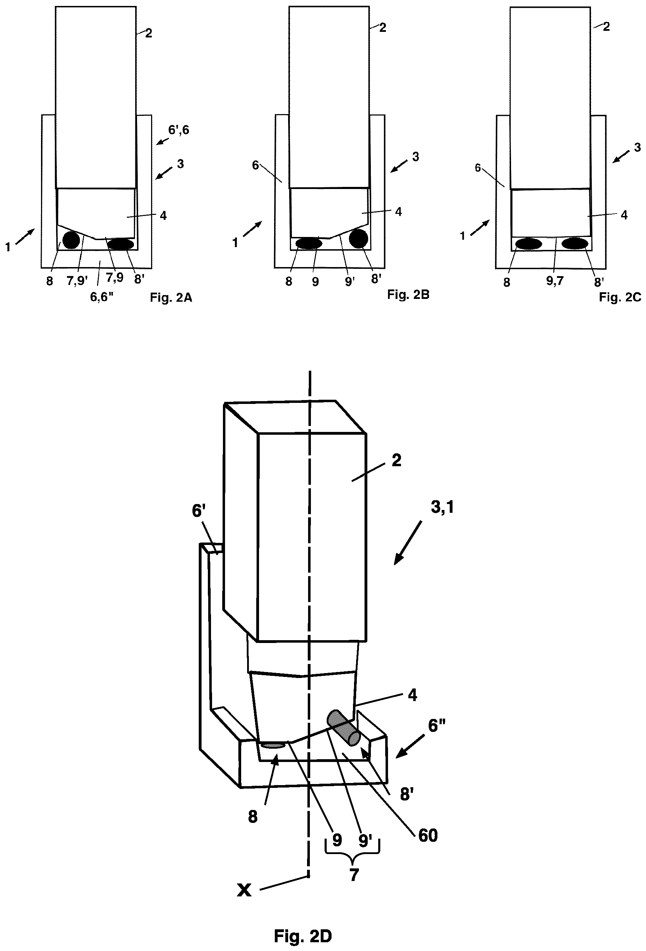

En accord avec un premier mode de réalisation, illustré aux figures 2, il peut être prévu que les contraintes d'écrasement exercées sélectivement par la ou chaque surface de commande 7, 7', préférentiellement en forme de bande circonférentielle, sur la ou chaque paire de portions de conduits 8, 8' associée, en fonction de la position angulaire de l'organe mobile 4 formant came, soient dirigées sensiblement parallèlement à l'axe de rotation X de l'organe mobile 4.

La surface de commande 7 peut dans ce cas consister par exemple en une surface discoïdale d'extrémité d'un corps cylindrique constituant la came 4, ladite surface présentant un plateau proéminent, s'étendant sur la moitié de l'aire de la surface environ, et perpendiculaire à l'axe X (demi-lune), et une région en pente, raccordée au plateau suivant un diamètre et s'étendant en retrait par rapport audit plateau. L'écrasement des portions de conduits 8, 8' s'effectue alors contre la surface 60 du berceau 6" du châssis en U 6, pour la paire logé dans ce dernier.

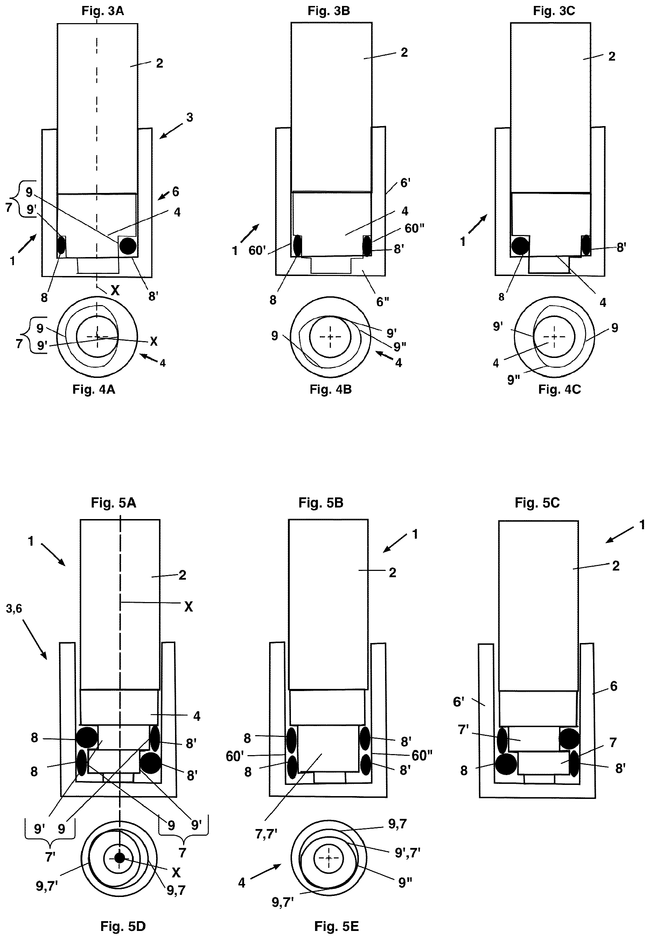

En accord avec un second mode de réalisation, illustré sur les figures 3 à 6, il peut être prévu que les contraintes d'écrasement exercées sélectivement par la ou chaque surface de commande 7, 7', préférentiellement en forme de bande circonférentielle, sur la ou chaque paire de portions de conduits 8, 8' associée, en fonction de la position angulaire de l'organe mobile 4 formant came, soient dirigées sensiblement radialement et perpendiculairement par rapport à l'axe de rotation X de l'organe mobile 4.

Dans ce mode de réalisation, l'écrasement des portions de conduits 8, 8' s'effectue contre des surfaces latérales 60' et 60" s'étendant entre les ailes 6' et reliant ces dernières. Pour la paire de portions logées dans le berceau 6", ces surfaces peuvent faire partie intégrante dudit berceau. Toutefois, et selon un autre arrangement constructif, les surfaces 60', 60" peuvent aussi être formées par les surfaces internes des ailes 6' elles-mêmes, lorsque lesdites portions de conduits s'étendent dans le châssis 6 par, et non pas perpendiculairement à elles. Dans ces différents cas précités, les contraintes de contre-réaction ne sont pas dirigées vers le micro-servomoteur 2 mais sont absorbées par le palier de guidage de l'axe X.

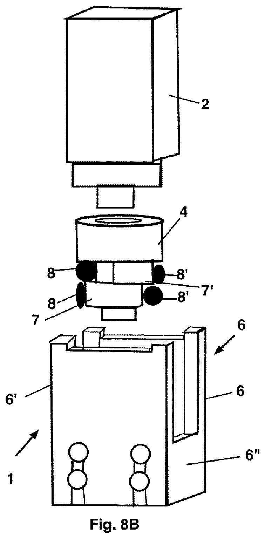

Alors que les figures 3 et 4 illustrent un module 1 de vanne double, c'est-à-dire comportant une unique surface de commande 7 agissant sur deux portions de conduits 8 et 8' dans un plan donné, il est possible de prévoir un module 1 de vanne multiple, qui avec un unique organe mobile 4 peut contrôler la circulation fluidique dans plusieurs paires de portions de conduits 8, 8' superposés, situés dans des plans mutuellement parallèles et espacés le long de l'axe X. Ainsi, en plus de la paire de portions de conduits 8, 8' disposées sur ou dans le berceau 6", au moins une paire supplémentaire 8, 8' est arrangée à distance dudit berceau, les deux paires venant en appui contre les mêmes surfaces 60', 60" (figures 5A à 5C et 8B).

Ainsi, en accord avec une variante du second mode de réalisation et comme illustré sur les figures 5 (pour une vanne quadruple), l'organe mobile 4 peut présenter une structure étagée et/ou composite et comporter au moins deux surfaces de commande 7 et 7' décalées mutuellement le long de son axe de rotation X, chaque surface de commande 7, 7' agissant sur une paire distincte de portions de conduits 8, 8' associées, situées en regard d'une surface 7, 7' correspondante.

On aboutit ainsi à un module de vanne 1 multiple, commandé par un unique actionneur 2 et dont les états (ouverture/fermeture des différentes voies contrôlées) sont déterminés par une came 4 étagée à surfaces de commande 7, 7' multiple.

Afin de pouvoir réaliser avec un tel module de vanne 1 multiple des séquences de régulation de circulation de fluide, avec des ouvertures et des fermetures de passage simultanées, décalées ou opposées pour les différentes paires de portions de conduits 8, 8' faisant partie dudit module, il peut être prévu que les différentes surfaces de commande 7, 7' de l'organe mobile 4 présentent des profils similaires et soient décalées angulairement autour de l'axe de rotation X dudit organe mobile 4, par exemple de 0°, de 45°, de 90° ou de 180°.

Dans l'exemple illustré sur les figures 5, les deux surfaces de commande 7 et 7' sont similaires en termes de profils mais décalées mutuellement de 180° (en opposition de phase). Une telle construction permet notamment de réaliser un circuit inverseur.

Sur les figures 5A à 5C et 8B, on relève aisément que les deux étages de commande (surfaces de commande 7 et 7'), dont chacun contrôle la circulation fluidique dans deux portions de conduits 8 et 8' reliées chacune à une ligne distincte 5, 5', permettent ainsi de réguler le passage de fluide(s) dans quatre lignes 5, 5' différentes, complètement indépendantes entre elles ou non (appartenance à un même réseau ou à une même partie de réseau de lignes de circulation), d'où la dénomination module de vanne quadruple pour cette variante de réalisation. Bien entendu, l'invention n'est pas limitée aux deux variantes représentées (module de vanne double et module de vanne quadruple), mais peut aussi être déclinée avec plus de deux surfaces de commande 7, 7' et plus de deux paires de portions de conduits 8, 8' superposées.

En outre, s'il est nécessaire de disposer d'une vanne simple, le module de vanne 1 peut alors n'être relié qu'à une seule ligne 5, 5' par une seule portion de conduit 8 ou 8'.

Bien que pour les surfaces de commande 7, 7' de nombreuses formes de profils peuvent être envisagées, il est avantageusement prévu que la ou chaque surface de commande 7, 7' présente, d'une part, au moins une région 9 d'un premier type dont la distance à l'axe de rotation X est maximale, préférentiellement fortement proéminente ou convexe, et dont le positionnement en regard d'une portion de conduit 8, 8' aboutit à un écrasement maximal de cette dernière, préférentiellement avec une obturation étanche de son passage, et, d'autre part, au moins une région 9' d'un second type dont la distance à l'axe de rotation X est minimale, préférentiellement faiblement proéminente ou sensiblement plane, et dont le positionnement en regard d'une portion de conduit 8, 8' ne génère sensiblement aucun écrasement de cette dernière, ces régions 9, 9' étant décalées autour de l'axe de rotation X ou situées à l'opposé l'une de l'autre par rapport à cet axe X.

Les figures 4 notamment illustrent, à titre d'exemple, une réalisation dans laquelle la ou chaque surface de commande 7, 7' comporte une région 9 du premier type et une région 9' du second type, ces deux régions 9 et 9' étant mutuellement décalées, avantageusement de 180°, autour de l'axe de rotation X de l'organe mobile 4.

Afin de pouvoir fournir un module de vanne 1 avec une position de fermeture des deux voies contrôlées (écrasement maximal simultané des deux portions de conduits 8, 8'), la région 9 du premier type s'étend sur sensiblement au moins 180° environ autour de l'axe de rotation X.

Pour favoriser l'élimination de tout à-coup dans la commande, limiter l'usure des portions de conduits 8, 8' et réaliser un écrasement progressif des portions de conduits 8, 8', la région 9 du premier type et la région 9' du second type sont reliées continûment par des régions intermédiaires 9" de surface de commande 7, 7' présentant une distance progressivement croissante ou décroissante par rapport à l'axe de rotation X selon la direction de déplacement sur la région intermédiaire 9" concernée, à savoir vers la région 9 du premier type ou vers la région 9' du second type.

Préférentiellement, chaque surface de commande 7, 7' présente un profil ou une forme de contour circonférentiel sans décrochement et continûment arrondi (cf. figures 4).

Pour pouvoir définir, pour une paire donnée de portions de conduits 8, 8', des états de fermeture des deux voies et/ou d'ouverture des deux voies, en plus d'états d'ouverture d'une seule des deux voies (l'autre étant fermée), la ou chaque surface de commande 7, 7' peut comporter trois régions 9, 9' de l'un des premier et second types et trois ou une région(s) 9', 9 de l'autre desdits premier et second types, deux régions 9 du premier type et/ou deux régions 9' du second type étant arrangées avec un décalage, avantageusement de 180°, autour de l'axe de rotation X de l'organe mobile 4 en étant intercalées entre une paire de régions opposées comprenant une région 9 du premier type et une région 9' du second type.

Lorsque l'amplitude angulaire maximale de rotation de l'organe mobile 4 est plus réduite (par exemple inférieure à +90°/-90°), le décalage entre régions différentes peut être plus faible que 180°.

En accord avec encore un autre mode de réalisation de la came 4, illustré à titre d'exemple sur les figures 26A à 26E (contour en forme de « tête de Mickey »), la ou chaque surface de commande 7, 7' peut présenter deux régions 9 du premier type espacées circonférentiellement par deux régions 9' du second type, ces régions étant arrangées et configurées de manière à permettre d'aboutir, par une rotation de 180° de la came 4, successivement à des configurations d'obturation sélective de l'une des portions de conduits 8, 8', d'obturation simultanée des deux portions de conduits 8, 8' ou de libre passage au niveau de ces dernières.

Le montage du micro-servomoteur 2 sur le châssis 6 peut être réalisé de différentes manières comme le montrent les figures et il peut par exemple être fixé sur les extrémités (libres) des ailes 6' du châssis en U 6, les conduits formant les portions 8, 8' consistant en des tubes élastiquement déformables adaptées pour une utilisation dans des pompes péristaltiques.

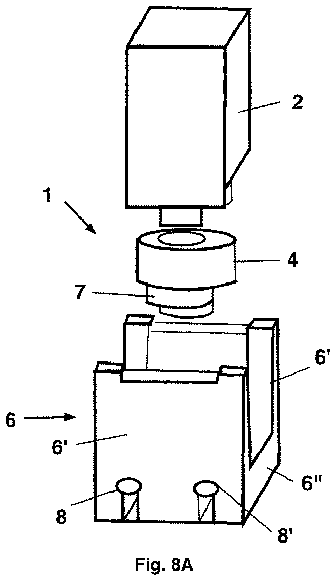

Selon une variante simple de réalisation pratique de l'invention, le module 1 peut ne comporter qu'une seule paire de portions de conduits 8 et 8' et ces dernières sont alors préférentiellement logées dans la base 6" du U formant berceau, et reposent contre deux surfaces planes adjacentes et mutuellement perpendiculaires, l'une desdites surfaces étant perpendiculaire à la direction de la force d'écrasement exercée par la came 4 et l'autre desdites surfaces étant perpendiculaire à la direction de l'axe de rotation X (cf. figures 8A à 8C).

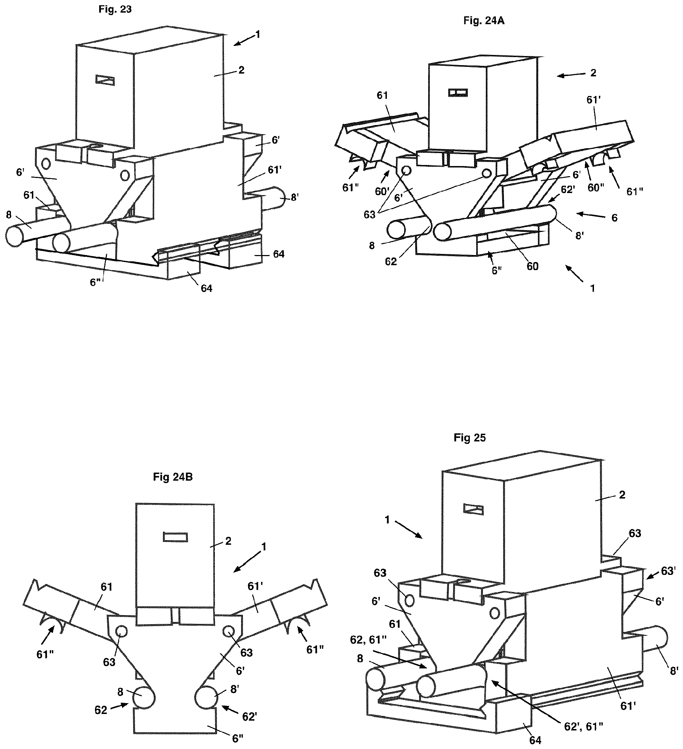

Conformément à un autre mode de réalisation du module de micro-vanne 1, illustré sur les figures 23 à 25, la ou chaque paire de portions de conduits 8 et 8' s'étend entre les deux ailes 6' du châssis en U 6 et est maintenue ou retenue, préférentiellement avec blocage au niveau des ailes 6', dans ledit châssis 6 par des parois escamotables ou amovibles 61, 61', lesquelles peuvent fournir le cas échéant les surfaces 60', 60" d'appui desdites portions 8, 8' lors de leur écrasement par la came 4. Une telle construction autorise un montage et un démontage aisés desdites portions au niveau du châssis 6 (en lieu et place d'un enfilement comme dans les figures 2 à 8).

Plus précisément, chaque aile 6' peut comporter sur ses deux côtés, au moins au niveau du berceau 6", au moins une découpe 62, 62' pour le passage et le logement calé de la portion de conduit 8, 8' concerné, chaque paroi 61, 61' comportant des moyens 61" de blocage des portions de conduits 8, 8' dans ces découpes 62, 62'. Bien entendu, ces découpes sont alignées deux par deux pour recevoir une portion de conduit correspondante. De plus, chaque aile peut comporter sur chaque côté latéral au moins deux découpes pour accommoder au moins deux paires de portions superposées (non représenté).

En accord avec une variante constructive pratique, chacune des parois 61, 61' peut être reliée par des liaisons pivot 63, 63' alignées aux deux ailes 6' du châssis 6, préférentiellement aux extrémités supérieures libres desdites ailes 6', ces parois 61, 61' pouvant être déplacées entre, d'une part, une position engagée dans laquelle elles sont rabattues contre le berceau 6" et dans laquelle les portions de conduits 8, 8' sont maintenues avec blocage entre lesdites ailes et lesdites parois et, d'autre part, une position dégagée dans laquelle elles sont relevées et écartées du berceau 6" et autorise l'enlèvement et la mise en place des portions de conduits au niveau du berceau 6". Ces parois 61 et 61' forment ainsi des volets pivotants latéraux pouvant aisément libérer l'accès à l'espace interne du châssis 6 et aux découpes 62 et 62' formant logements pour les portions de conduits 8 et 8'. Les moyens de blocage 61" peuvent consister en des poussoirs maintenant les portions de conduits au fond des découpes 62, 62' à l'état rabattu ou fermé des volets 61, 61'.

Afin d'assurer leur maintien rigide en cours d'utilisation du module1, ce dernier comprend avantageusement au moins un élément 64 de verrouillage des parois 61, 61' en position de blocage des portions de conduits 8, 8' dans le châssis 6. Préférentiellement, cet élément verrouille simultanément les deux parois et peut être de nature amovible.

Comme le montrent les figures 23 et 25, le ou chaque élément de verrouillage 64 consiste avantageusement en un étrier configuré pour maintenir les parois 61, 61' rabattues contre le berceau 6" du châssis 6. Préférentiellement, deux étriers 64 qui viennent en prise dans des gorges des parois peuvent prévus, autorisant un montage aisé et offrant aussi une résistance suffisante aux contraintes d'écrasement des portions de conduits y venant en appui.

L'homme du métier comprend que la variante de réalisation du dispositif de micro-vanne 1 tel que décrit ci-dessus en dernier lieu et illustré à titre d'exemple de construction pratique sur les figures 23 à 25, peut être installé comme organe de régulation de circulation fluidique à n'importe quel emplacement sur les lignes 5 et 5' pour lesquelles il contrôle le débit de fluide qui les traverse. Et comme déjà indiqué précédemment, les portions de conduits 8 et 8' peuvent être soit des segments courants desdites lignes sur lesquels le dispositif est monté, soit des segments de tube séparés, raccordés et insérés en série dans ces lignes. Dans ce dernier cas, les portions 8, 8' peuvent constituées des consommables interchangeables en cas d'usure.

En outre, il peut être prévu d'installer ces dispositifs 1, de manière démontable préférentiellement, par le biais de platines fixées sur des parois d'appareils ou de machines et fournissant des logements dans lesquels les boîtiers des micro-servomoteurs 2 peuvent être emboîtés avec blocage en position.

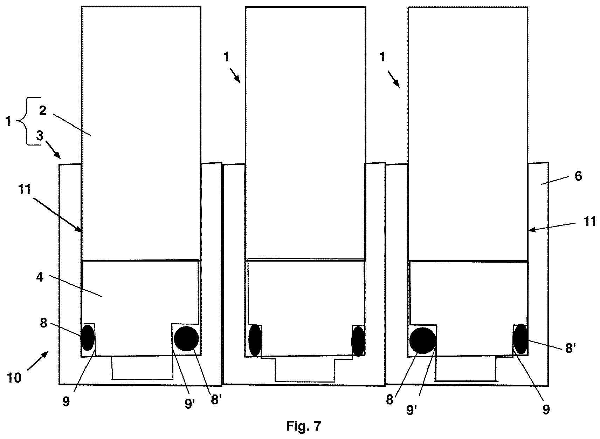

L'invention a également pour objet, comme le montre la figure 7, une unité 10 de contrôle fluidique à voies multiples, pour le contrôle de la circulation de fluide liquide ou gazeux dans au moins deux paires de lignes de circulation 5, 5', les lignes 5 et 5' de chaque paire étant contrôlées de manière mutuellement interdépendante.

Cette unité 10 est caractérisée en ce qu'elle intègre fonctionnellement au moins deux modules de vanne 1 tels que décrits ci-dessus et en ce qu'elle est constituée par au moins deux composantes fonctionnelles 2, 4 comprenant chacune un micro-servomoteur 2 dont l'arbre de sortie entraîne ou correspond à l'axe de rotation X d'une came 4 associée présentant au moins une surface de commande 7, 7' laquelle peut venir en engagement sous pression avec deux portions de conduits 8 et 8' correspondantes formant les segments locaux de lignes de circulation 5, 5', en vue de l'obturation locale sélective de leur passage par écrasement, ces différentes paires de portions 8, 8' étant montées dans les différents compartiments 11 d'un unique corps support 6, d'un seul tenant ou composite (par exemple formé de plusieurs corps en U accolés les uns aux autres latéralement), lequel est compartimenté en adéquation avec les différentes composantes fonctionnelles 2, 4 rapportées.

Grâce à l'invention, il est ainsi possible de fournir une centrale de régulation fluidique pouvant contrôler de nombreuses lignes de circulation liquide, semi-liquide ou gazeuse, et intégrant des modules 1 de vanne double ou multiple comme évoqués ci-dessus, ce sous la forme d'une unité d'encombrement faible et conçue en fonction de séquences opératoires prédéterminées à exécuter.

Cette unité 10 peut être du type composite et être constituée par l'assemblage côte à côte de deux ou plusieurs modules de vanne 1 comportant chacun son propre corps support 6 définissant un compartiment 11 (en lieu et place d'un corps support 6 d'un seul tenant pour l'ensemble des modules de vanne 1 intégrés dans l'unité 10, lequel corps support 6 étant alors subdivisé intérieurement en plusieurs compartiments 11).

Par ailleurs, cette unité 10 peut intégrer, le cas échéant, des modules de vannes 1 de tailles différentes, voire des types différents, adaptés à des débits et des natures de fluides à réguler variés (gaz, liquides, semi-liquides).

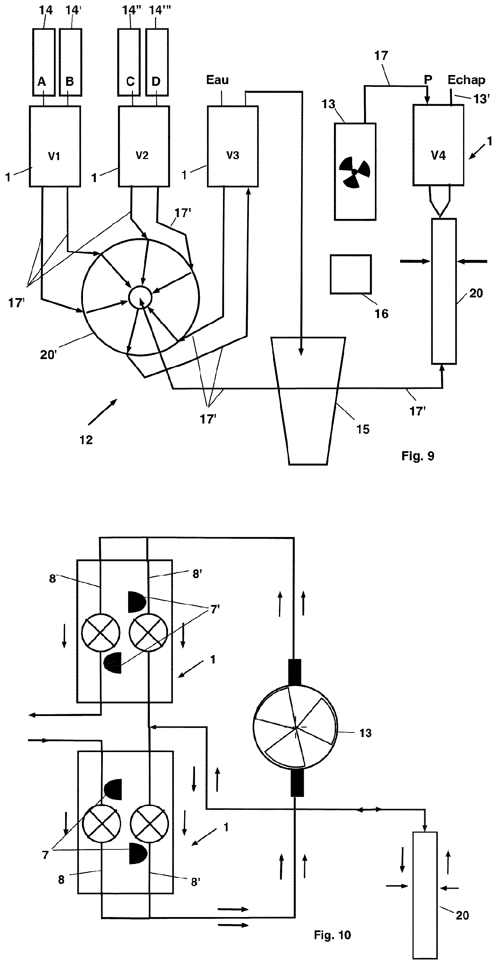

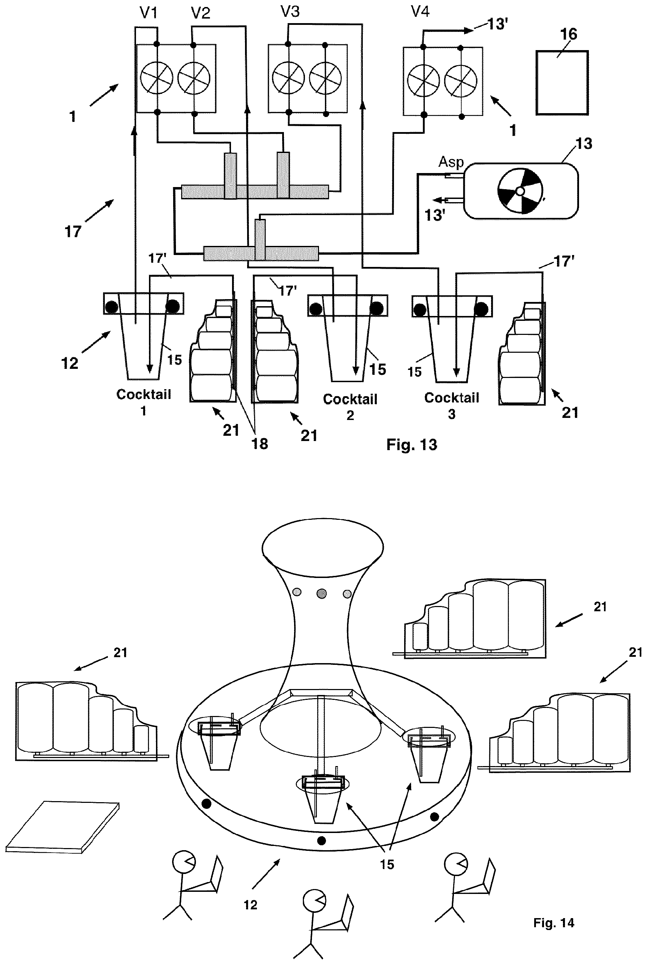

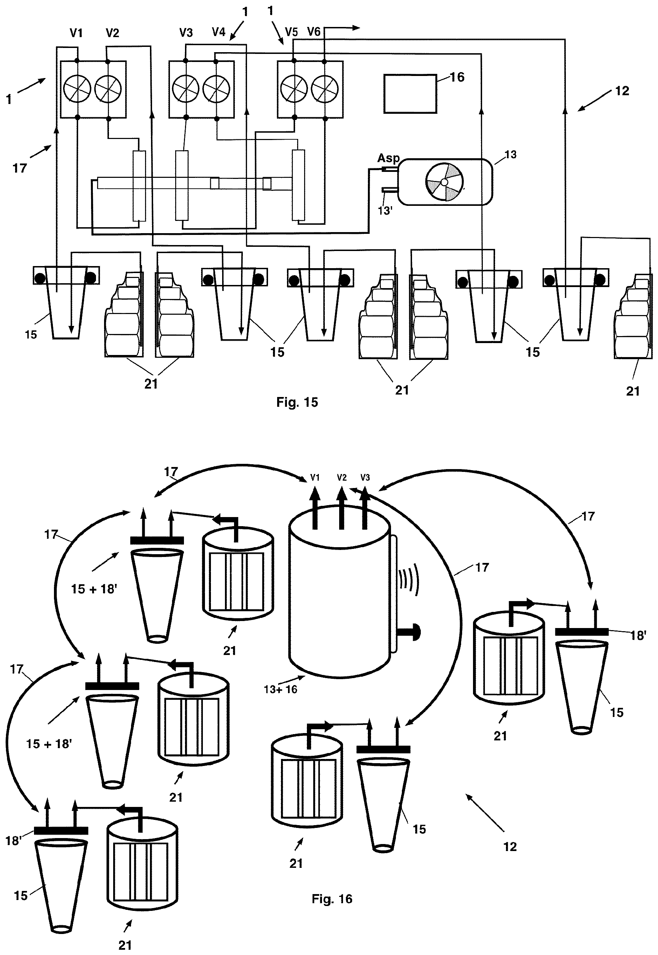

Enfin, l'invention concerne également, comme le montrent à titre d'exemples les figures 9 à 17 et 27, un dispositif automatisé 12 de préparation de mélanges de produits liquides ou semi-liquides, comprenant au moins un moyen d'aspiration et/ou de refoulement gazeux(se) 13, au moins deux réservoirs 14, 14', 14", 14'" contenant des produits de base différents, au moins un réceptacle 15 de recueil du mélange préparé, une unité électronique de commande 16 et un arrangement de lignes de circulation 5, 5', 17, 17' de fluides liquide et gazeux, de moyens 18, 18' de raccordement fluidique et de moyens 1, 10 de contrôle de la circulation fluidique depuis et vers ledit au moins un ou chaque réceptacle 15.

Conformément à l'invention, les moyens de contrôle de la circulation fluidique comprennent au moins un module de vanne 1 tel que mentionné précédemment, préférentiellement au moins une unité de contrôle fluidique 10 telle qu'évoquée ci-dessus, piloté(e) par l'unité de commande 16.

Le ou chaque module 1 ou l'unité 10 peut être mis en oeuvre pour contrôler les circulations de fluides liquides et/ou gazeux en fonction de leur implantation et de leur fonction dans l'architecture du dispositif 12.

En accord avec un premier mode de réalisation du dispositif automatisé 12 précité, ressortant des figures 9 et 10, ce dernier peut comprendre un moyen de dosage de liquide 20 tel qu'un volumètre, pouvant être relié, au niveau d'une extrémité inférieure, sélectivement, préférentiellement successivement en fonction d'une séquence opératoire, à l'un quelconque des réservoirs 14, 14', 14", 14‴, et à un ou plusieurs réceptacles 15, par l'intermédiaire de plusieurs modules de vanne 1 et/ou d'unité(s) 10 de contrôle fluidique, et, au niveau d'une extrémité supérieure, à une pompe 13, préférentiellement par l'intermédiaire d'un module de vanne 1 à double came (avec deux surfaces de commande 7, 7'), formant circuit fluidique commutateur.

Le dispositif 12 représenté sur la figure 9 comprend en outre avantageusement un distributeur 20' reliant les différentes lignes de circulation fluidique 17', dont l'une peut être reliée à un réservoir d'eau pour des besoins de dilution des mélanges dans le réceptacle 15 et de rinçage des lignes, des modules de vanne et du volumètre.

Une telle réalisation du dispositif 12 est notamment adaptée à une application dans le domaine de la nutrition des végétaux, les réservoirs 14, 14', 14", 14‴, contenant des nutriments et autres substances actives sous forme liquide ou semi-liquide qu'il y a lieu de doser en fonction du mélange souhaité.

Le mode opératoire d'un tel dispositif est notamment décrit dans le document EP-A-2 547 433 au nom de la demanderesse.

En accord avec un second mode de réalisation du dispositif automatisé 12, il peut être prévu que ce dernier comporte au moins un module de vanne 1 contrôlant la circulation d'air entre, d'une part, un moyen d'aspiration 13 ou le milieu atmosphérique et, d'autre part, le ou chacun des réceptacle(s) 15, ce de manière indépendante ou groupée.

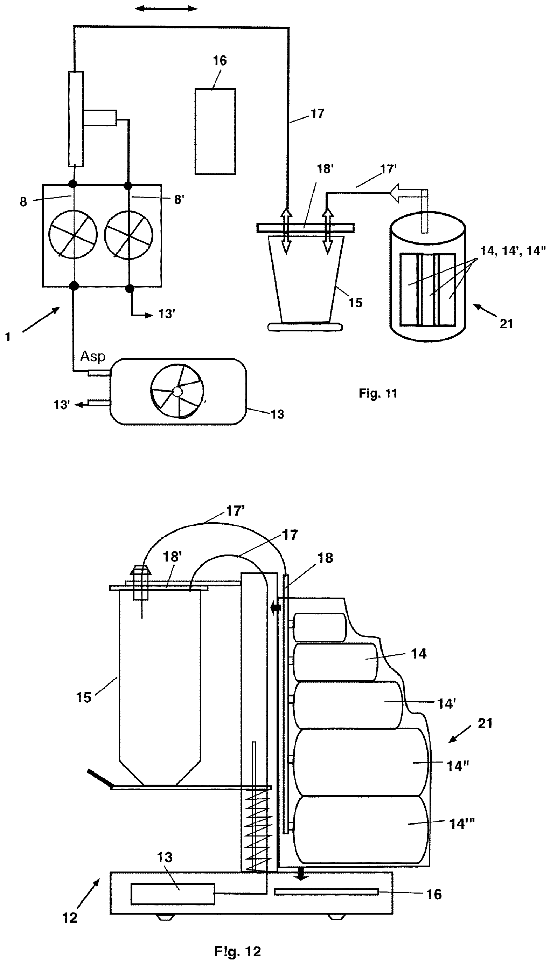

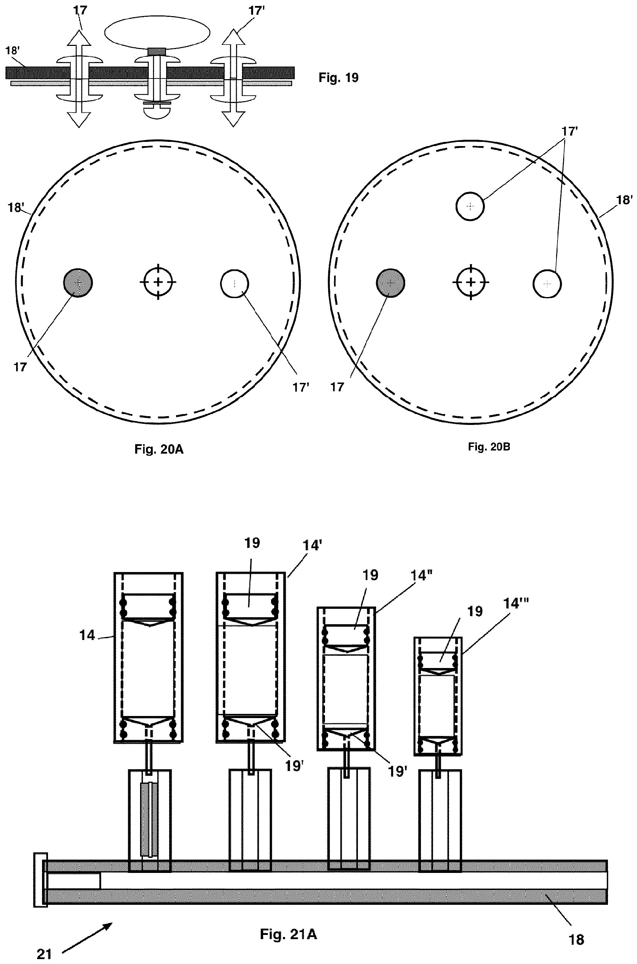

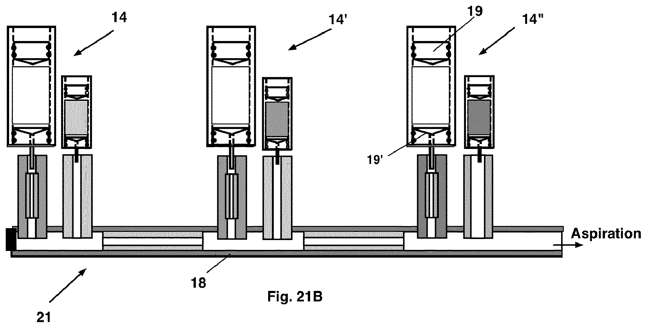

Comme le montrent les figures 12 à 15, en relation avec les figures 21A et 21B, il est avantageusement prévu que les réservoirs 14, 14', 14", 14'" de produits de base se présentent sous la forme de contenants raccordés en parallèle sur une rampe de distribution 18 et pouvant être vidés par dépression ou aspiration, la délivrance d'un produit par un réservoir 14, 14', 14", 14'" s'effectuant avec déplacement d'un piston 19 ou d'un élément mobile analogue, dans le contenant du réservoir 14, 14', 14", 14'" concerné, se présentant avantageusement sous la forme d'une seringue munie d'un piston 19 avec une forme conjuguée par rapport à celle de la sortie 19' du contenant, de manière à constituer une vanne fermée en fin de vidage. Chaque réservoir intègre ainsi une vanne d'obturation qui est active (fermée de manière étanche) en fin de vidage et qui permet une réalisation simple des cartouches prédosées.

Pour éventuellement décaler dans le temps le vidage de certains réservoirs, la rampe de raccordement et de distribution peut présenter des sections de conduit commun ou de dérivation de diamètres différents, générant des pertes de charge et des débits d'écoulement spécifiques aux différentes sections précitées (cf. figures 21A et 21B).

En outre, en prévoyant des réservoirs pourvus de pistons se déplaçant de manière étanche dans un contenant sensiblement indéformable durant l'opération de vidage, il peut être garanti que la totalité de la dose de substance contenue dans le réservoir concerné a bien été transférée en fin d'opération.

Préférentiellement, les réservoirs 14, 14', 14", 14'" de produits de base se présentent sous la forme d'ensembles 21 pré-conditionnés de plusieurs réservoirs pré-dosés de produits de base sélectionnés, chaque ensemble 21 correspondant à un mélange déterminé sélectionnable et chaque ensemble de réservoirs pré-dosés 14, 14', 14", 14'" étant logé dans un emballage unique, avantageusement conjointement avec une rampe de distribution 18 à sortie unique, reliée aux sorties de vidage 19' desdits réservoirs 14, 14', 14", 14'" (cf. figures 11 à 16 et 21). L'ensemble 21 conditionné avec sa rampe 18 dans un emballage constitue ainsi un consommable prêt à l'usage (à l'instar d'une cartouche) et pouvant être aisément connecté au dispositif 12.

Comme le montrent également les figures 11 à 17, l'arrangement de lignes de circulation et de moyens de raccordement comprend pour le ou chaque réceptacle 15 considéré, d'une part, une ligne 17' de circulation liquide de produits de base reliant un ensemble de réservoirs pré-dosés 14, 14', 14", 14'" au réceptacle considéré 13, et d'autre part, une ligne 17 de circulation gazeuse reliant ledit réceptacle 15 fluidiquement et de manière sélective, par l'intermédiaire d'un module de vanne 1, soit au moyen d'aspiration 13, soit au milieu atmosphérique 13', directement ou en passant par un autre réceptacle 15 (mise en cascade ou en parallèle de plusieurs réceptacles 15 créant un effet de démultiplication).

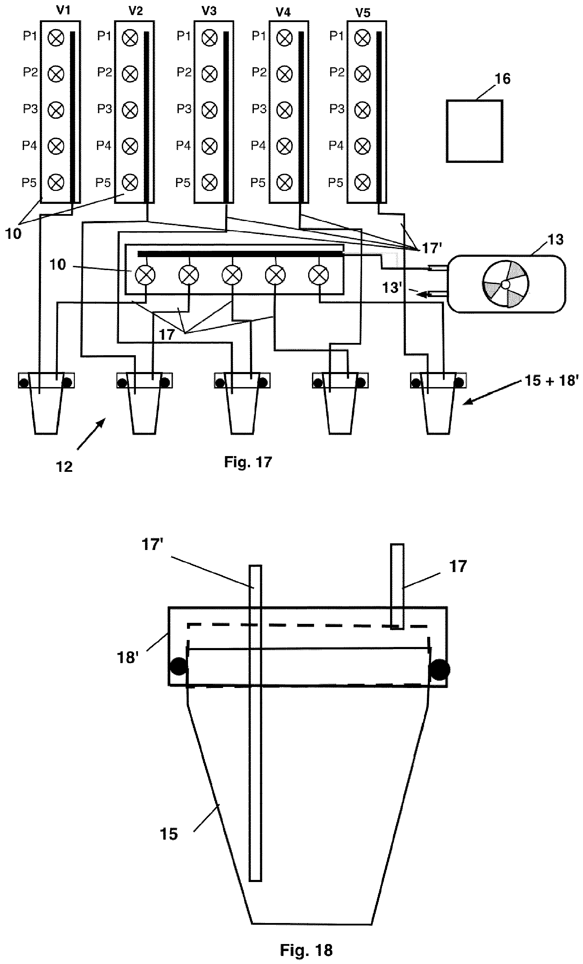

Conformément à une caractéristique constructive préférentielle, ressortant notamment des figures 18 à 20, le raccordement de lignes de circulation et de moyens de raccordement comprend pour le ou chaque réceptacle 15 considéré, d'une part, une ligne 17' de circulation liquide de produits de base reliant un ensemble de réservoirs pré-dosés 14, 14', 14", 14'" au réceptacle considéré 13, et d'autre part, une ligne 17 de circulation gazeuse reliant ledit réceptacle 15 fluidiquement et de manière sélective, par l'intermédiaire d'un module de vanne 1, soit au moyen d'aspiration 13, soit au milieu atmosphérique 13', directement ou en passant par un autre réceptacle 15.

Un dispositif automatisé en accord avec ce second mode de réalisation, peut par exemple trouver une application avantageuse en tant qu'appareil ludique ou professionnel pour la préparation de cocktails. Dans ce cas, chaque ensemble 21 sous forme de cartouche comprend dans ses réservoirs les substances liquides ou semi-liquides alcoolisées ou non, pré-dosées correspondant exactement à la composition du cocktail souhaité, les quantités étant déterminées pour fournir un unique cocktail.

En prévoyant un couvercle 18' pourvu en sous-face d'un revêtement siliconé et relativement pesant, il est possible d'utiliser comme réceptacle 15 directement le verre destiné à la consommation du cocktail souhaité.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention telle que définie par les revendications.

## Revendications

1. Module de vanne (1) à actionneur électrique (2) intégré, ledit module comprenant, d'une part, un dispositif de vanne (3) comportant un organe mobile (4) dont le positionnement contrôle la circulation d'un fluide dans au moins deux lignes de circulation (5, 5') traversant ledit dispositif de vanne (3), et, d'autre part, un actionneur (2) apte et destiné à déplacer en rotation l'organe mobile rotatoire (4) du dispositif de vanne (3) autour d'un axe (X),
le dispositif de vanne (3) comprenant un corps support (6) dans lequel est monté ledit au moins un organe mobile (4) précité, formant came guidée en rotation et pourvue d'au moins une surface de commande (7, 7'), et également au moins deux portions de conduits (8, 8') formant des segments locaux des lignes de circulation (5, 5'), ces portions de conduits (8, 8') et cet organe mobile (4) étant arrangés et configurés de manière à ce que ladite au moins une surface de commande (7, 7') puisse venir en engagement et modifier par écrasement local les sections de passage desdites au moins deux portions de conduits (8, 8'), ce de manière mutuellement différenciée et en fonction de la position en rotation de l'organe mobile (4),
module de vanne (1) **caractérisée en ce que** l'actionneur (2) consiste en un micro-servomoteur, monté sur le corps support (6), l'organe mobile (4) conservant sa position angulaire en rotation en l'absence de sollicitation active de la part dudit micro-servomoteur (2),
**en ce que** ledit dispositif (1) est formé de deux composantes assemblées entre elles, à savoir, une composante fonctionnelle formée par le micro-servomoteur (2) dont l'axe de sortie porte l'organe formant came (4) rotatoire et présentant la ou les surface(s) de commande (7, 7'), et une composante structurelle formée par le corps support (6) sous forme de châssis en U,
**en ce que** le micro-servomoteur (2) est fixé sur les ailes (6') du U, et
**en ce que** les portions de conduits (8, 8'), de ladite au moins une paire de portions de conduits, ont des parois élastiquement déformables, sont disposées sur ou logées dans la base (6") du U, formant berceau, et reposent chacune contre au moins une surface (60, 60', 60") perpendiculaire à la direction de la force d'écrasement exercée par la came (4) lorsqu'elle vient en engagement avec la portion de conduit concernée (8, 8').

2. Module de vanne selon la revendication 1, **caractérisé en ce que** les portions de conduits (8, 8') sont arrangées par paire(s) en regard d'une surface de commande (7, 7'), préférentiellement de part et d'autre de l'axe de rotation (X) de l'organe mobile (4), et sont montées avec un maintien calé et une extension rectiligne dans le corps support (6).

3. Module de vanne selon la revendication 1 ou 2, **caractérisé en ce que** les contraintes d'écrasement exercées sélectivement par la ou chaque surface de commande (7, 7'), préférentiellement en forme de bande circonférentielle, sur la ou chaque paire de portions de conduits (8, 8') associée, en fonction de la position angulaire de l'organe mobile (4) formant came, sont dirigées sensiblement radialement et perpendiculairement par rapport à l'axe de rotation (X) de l'organe mobile (4).

4. Module de vanne selon l'une quelconque des revendications 1 à 3, **caractérisé en ce que** l'organe mobile (4) présente une structure étagée et/ou composite et comporte au moins deux surfaces de commande (7 et 7') décalées mutuellement le long de son axe de rotation (X), chaque surface de commande (7, 7') agissant sur une paire distincte de portions de conduits (8, 8') associées.

5. Module de vanne selon la revendication 4, **caractérisé en ce que** les différentes surfaces de commande (7, 7') de l'organe mobile (4) présentent des profils similaires et sont décalées angulairement autour de l'axe de rotation (X) dudit organe mobile (4), par exemple de 0°, de 45°, de 90° ou de 180°.

6. Module de vanne selon l'une quelconque des revendications 1 à 5, **caractérisé en ce que** la ou chaque surface de commande (7, 7') présente, d'une part, au moins une région (9) d'un premier type dont la distance à l'axe de rotation (X) est maximale, préférentiellement fortement proéminente ou convexe, et dont le positionnement en regard d'une portion de conduit (8, 8') aboutit à un écrasement maximal de cette dernière, préférentiellement avec une obturation étanche de son passage, et, d'autre part, au moins une région (9') d'un second type dont la distance à l'axe de rotation (X) est minimale, préférentiellement faiblement proéminente ou sensiblement plane, et dont le positionnement en regard d'une portion de conduit (8, 8') ne génère sensiblement aucun écrasement de cette dernière, ces régions (9, 9') étant décalées autour de l'axe de rotation (X) ou situées à l'opposé l'une de l'autre par rapport à cet axe (X).

7. Module de vanne selon la revendication 6, **caractérisé en ce que** la ou chaque surface de commande (7, 7') comporte une région (9) du premier type et une région (9') du second type, ces deux régions (9 et 9') étant décalées de 180° autour de l'axe de rotation (X) de l'organe mobile (4) et la région (9) du premier type s'étendant sur sensiblement au moins 180° environ autour de l'axe de rotation (X).

8. Module de vanne selon l'une quelconque des revendications 6 et 7, **caractérisé en ce que** la région (9) du premier type et la région (9') du second type sont reliées continûment par des régions intermédiaires (9") de surface de commande (7, 7') présentant une distance progressivement croissante ou décroissante par rapport à l'axe de rotation (X) selon la direction de déplacement sur la région intermédiaire (9") concernée, à savoir vers la région (9) du premier type ou vers la région (9') du second type.

9. Module de vanne selon la revendication 6, **caractérisé en ce que** la ou chaque surface de commande (7, 7') comporte trois régions (9, 9') de l'un des premier et second types et trois ou une région(s) (9', 9) de l'autre desdits premier et second types, deux régions (9) du premier type et/ou deux régions (9') du second type étant arrangées avec un décalage de 180° autour de l'axe de rotation (X) de l'organe mobile (4) en étant intercalées entre une paire de régions opposées comprenant une région (9) du premier type et une région (9') du second type.

10. Module de vanne selon l'une quelconque des revendications 1 à 9, **caractérisé en ce que** les portions de conduits reposent contre deux surfaces planes adjacentes (60, 60' ; 60") et mutuellement perpendiculaires dudit châssis (6), l'une (60' ou 60") desdites surfaces étant perpendiculaire à la direction de la force d'écrasement exercée par la came (4) et l'autre (60) desdites surfaces étant perpendiculaire à la direction de l'axe de rotation (X).

11. Module de vanne selon l'une quelconque des revendications 1 à 10, **caractérisé en ce que** la ou chaque paire de portions de conduits (8, 8') s'étend entre les deux ailes (6') du châssis en U (6) et est maintenue, préférentiellement avec blocage au niveau des ailes (6'), dans ledit châssis (6) par des parois escamotables ou amovibles (61, 61'), fournissant le cas échéant les surfaces (60', 60") d'appui desdites portions (8, 8') lors de leur écrasement par la came (4), **en ce que** chacune des parois (61, 61') est reliée par des liaisons pivot (63, 63') alignées aux deux ailes (6') du châssis (6), préférentiellement aux extrémités supérieures libres desdites ailes (6'), ces parois (61, 61') pouvant être déplacées entre, d'une part, une position engagée dans laquelle elles sont rabattues contre le berceau (6") et dans laquelle les portions de conduits (8, 8') sont maintenues avec blocage entre lesdites ailes et lesdites parois et, d'autre part, une position dégagée dans laquelle elles sont relevées et écartées du berceau (6") et autorise l'enlèvement et la mise en place des portions de conduits (8, 8') au niveau du berceau (6"), et **en ce qu'**il comprend au moins un élément amovible (64) de verrouillage des parois (61, 61') en position de blocage des portions de conduits (8, 8') dans le châssis (6), le ou chaque élément de verrouillage (64) consistant avantageusement en un étrier configuré pour maintenir les parois (61, 61') rabattues contre le berceau (6") du châssis (6).

12. Module de vanne selon l'une quelconque des revendications 1 à 11, **caractérisé en ce que** le micro-servomoteur (2) est fixé sur les extrémités des ailes (6') du châssis en U (6), les conduits formant les portions (8, 8') consistant en des tubes élastiquement déformables adaptées pour une utilisation dans des pompes péristaltiques.

13. Module de vanne selon la revendication 6, **caractérisé en ce que** la ou chaque surface de commande (7, 7') présente deux régions (9) du premier type espacées circonférentiellement par deux régions (9') du second type, ces différentes régions (9, 9') étant arrangées et configurées de manière à permettre d'aboutir, par une rotation de 180° de la came (4), successivement à des configurations d'obturation sélective de l'une des portions de conduits (8, 8'), d'obturation simultanée des deux portions de conduits (8, 8') ou de libre passage au niveau de ces dernières.

14. Unité (10) de contrôle fluidique à voies multiples, pour le contrôle de la circulation de fluide liquide ou gazeux dans au moins deux paires de lignes de circulation (5, 5'), les lignes (5 et 5') de chaque paire étant contrôlées de manière mutuellement interdépendante,
unité (10) **caractérisée en ce qu'**elle intègre fonctionnellement au moins deux modules de vanne (1) selon l'une quelconque des revendications 1 à 13 et **en ce qu'**elle est constituée par au moins deux composantes fonctionnelles (2, 4) comprenant chacune un micro-servomoteur (2) dont l'arbre de sortie entraîne ou correspond à l'axe de rotation (X) de la came (4) présentant au moins une surface de commande (7, 7') laquelle peut venir en engagement sous pression avec deux portions de conduits (8, 8') formant les segments locaux des lignes de circulation (5, 5'), en vue de l'obturation locale sélective de leur passage par écrasement, ces différentes paires de portions (8, 8') étant montées dans les différents compartiments (11) d'un unique corps support (6) d'un seul tenant ou composite, lequel est compartimenté en adéquation avec les différentes composantes fonctionnelles (2, 4) rapportées.

15. Dispositif automatisé (12) de préparation de mélanges de produits liquides ou semi-liquides, comprenant au moins un moyen d'aspiration et/ou de refoulement gazeux(se) (13), au moins deux réservoirs (14, 14', 14", 14'") contenant des produits de base différents, au moins un réceptacle (15) de recueil du mélange préparé, une unité électronique de commande (16) et un arrangement de lignes de circulation (5, 5', 17, 17') de fluides liquide et gazeux, de moyens (18, 18') de raccordement fluidique et de moyens (1, 10) de contrôle de la circulation fluidique depuis et vers ledit au moins un réceptacle (15),
dispositif (12) **caractérisé en ce que** les moyens de contrôle de la circulation fluidique comprennent au moins un module de vanne (1) selon l'une quelconque des revendications 1 à 13, préférentiellement au moins une unité de contrôle fluidique (10) selon la revendication 14, piloté(e) par l'unité de commande (16) et constituant un commutateur ou un sélecteur fluidique commandé.

## Patentansprüche

1. Ventilmodul (1) mit einem integrierten elektrischen Aktuator (2), wobei das Modul einerseits eine Ventilvorrichtung (3) mit einem beweglichen Organ (4), dessen Positionierung die Zirkulation eines Fluids in mindestens zwei die Ventilvorrichtung (3) durchquerenden Zirkulationsleitungen (5, 5') steuert, und andererseits einen Aktuator (2), der dazu geeignet und bestimmt ist, das drehbare bewegliche Organ (4) der Ventilvorrichtung (3) um eine Achse (X) zu drehen, umfasst,
wobei die Ventilvorrichtung (3) einen Tragkörper (6), in dem das genannte mindestens eine bewegliche Organ (4) montiert ist, das einen drehbar geführten und mit mindestens einer Steuerfläche (7, 7') versehenen Nocken bildet, und außerdem mindestens zwei Leitungsabschnitte (8, 8'), die lokale Segmente der Zirkulationsleitungen (5, 5') bilden, umfasst, wobei die Leitungsabschnitte (8, 8') und das bewegliche Organ (4) dazu angeordnet und ausgelegt sind, dass die mindestens eine Steuerfläche (7, 7') mit den mindestens zwei Leitungsabschnitten (8, 8') in Eingriff kommen und deren Durchgangsquerschnitte durch lokale Quetschung verändern kann, und zwar in wechselseitig differenzierter Weise und in Abhängigkeit von der Drehposition des beweglichen Organs (4),
wobei das Ventilmodul (1) **dadurch gekennzeichnet ist, dass** der Aktuator (2) aus einem Mikro-Servomotor besteht,
der am Tragkörper (6) montiert ist, wobei das bewegliche Organ (4) bei Abwesenheit einer aktiven Beanspruchung seitens des Mikro-Servomotors (2) seine Drehwinkelposition beibehält,
dass die Vorrichtung (1) aus zwei miteinander verbundenen Komponenten gebildet ist, nämlich einer funktionellen Komponente, die durch den Mikro-Servomotor (2) gebildet ist, dessen Ausgangsachse das drehbare Organ trägt, das einen Nocken (4) bildet und die Steuerfläche(n) (7, 7') aufweist, und einer strukturellen Komponente, die durch den Tragkörper (6) in Form eines U-förmigen Rahmens gebildet ist,
dass der Mikro-Servomotor (2) an den Flügeln (6') des U befestigt ist und
dass die Leitungsabschnitte (8, 8') des mindestens einen Paars von Leitungsabschnitten elastisch verformbare Wände aufweisen, an oder in der Basis (6") des U, die eine Wiege bildet, angeordnet sind und jeweils an einer Fläche (60, 60', 60") anliegen, die senkrecht zur Richtung der Quetschkraft verläuft, die durch den Nocken (4) ausgeübt wird, wenn dieser mit dem betreffenden Leitungsabschnitt (8, 8') in Eingriff kommt.

2. Ventilmodul nach Anspruch 1, **dadurch gekennzeichnet, dass** die Leitungsabschnitte (8, 8') paarweise gegenüber einer Steuerfläche (7, 7'), vorzugsweise auf beiden Seiten der Drehachse (X) des beweglichen Organs (4), angeordnet sind und mit einem verkeilten Halt und einer geradlinigen Erstreckung im Tragkörper (6) montiert sind.

3. Ventilmodul nach Anspruch 1 oder 2, **dadurch gekennzeichnet, dass** die Quetschkräfte, die in Abhängigkeit von der Winkelposition des beweglichen Organs (4), das den Nocken bildet, selektiv durch die bzw. jede Steuerfläche (7, 7') vorzugsweise in Form eines Umfangsbands auf das bzw. jedes zugehörige Paar von Leitungsabschnitten (8, 8') ausgeübt werden, im Wesentlichen radial und senkrecht zur Drehachse (X) des beweglichen Organs (4) gerichtet sind.

4. Ventilmodul nach einem der Ansprüche 1 bis 3, **dadurch gekennzeichnet, dass** das bewegliche Organ (4) eine Stufen- und/oder Verbundstruktur aufweist und mindestens zwei Steuerflächen (7 und 7') umfasst, die entlang seiner Drehachse (X) gegeneinander versetzt sind, wobei jede Steuerfläche (7, 7') auf ein separates Paar zugeordneter Leitungsabschnitte (8, 8') wirkt.

5. Ventilmodul nach Anspruch 4, **dadurch gekennzeichnet, dass** die verschiedenen Steuerflächen (7, 7') des beweglichen Organs (4) ähnliche Profile aufweisen und um die Drehachse (X) des beweglichen Organs (4) winkelversetzt sind, beispielsweise um 0°, 45°, 90° oder 180°.

6. Ventilmodul nach einem der Ansprüche 1 bis 5, **dadurch gekennzeichnet, dass** die bzw. jede Steuerfläche (7, 7') einerseits mindestens einen vorzugsweise stark vorspringenden oder konvexen Bereich (9) eines ersten Typs aufweist, dessen Abstand zur Drehachse (X) maximal ist und dessen Positionierung gegenüber einem Leitungsabschnitt (8, 8') zu einer maximalen Quetschung desselben führt, vorzugsweise mit einem dichten Verschluss seines Durchgangs, und andererseits mindestens einen vorzugsweise schwach vorstehenden oder im Wesentlichen ebenen Bereich (9') eines zweiten Typs, dessen Abstand zur Drehachse (X) minimal und dessen Positionierung gegenüber einem Leitungsabschnitt (8, 8') im Wesentlichen zu keiner Quetschung desselben führt, wobei diese Bereiche (9, 9') um die Drehachse (X) versetzt sind oder in Bezug auf diese Achse (X) einander gegenüberliegend angeordnet sind.

7. Ventilmodul nach Anspruch 6, **dadurch gekennzeichnet, dass** die bzw. jede Steuerfläche (7, 7') einen Bereich (9) des ersten Typs und einen Bereich (9') des zweiten Typs aufweist, wobei diese beiden Bereiche (9 und 9') um die Drehachse (X) des beweglichen Organs (4) um 180° versetzt sind, und wobei sich der Bereich (9) des ersten Typs über im Wesentlichen mindestens etwa 180° um die Drehachse (X) erstreckt.

8. Ventilmodul nach einem der Ansprüche 6 und 7, **dadurch gekennzeichnet, dass** der Bereich (9) des ersten Typs und der Bereich (9') des zweiten Typs kontinuierlich durch Zwischenbereiche (9") der Steuerfläche (7, 7') verbunden sind, die in der Bewegungsrichtung auf dem betreffenden Zwischenbereich (9"), d. h. zum Bereich (9) des ersten Typs bzw. zum Bereich (9') des zweiten Typs hin, einen progressiv zunehmenden bzw. abnehmenden Abstand zur Drehachse (X) aufweisen.

9. Ventilmodul nach Anspruch 6, **dadurch gekennzeichnet, dass** die bzw. jede Steuerfläche (7, 7') drei Bereiche (9, 9') eines des ersten und des zweiten Typs und drei oder einen Bereich(e) (9', 9) des anderen des ersten und des zweiten Typs aufweist, wobei zwei Bereiche (9) des ersten Typs und/oder zwei Bereiche (9') des zweiten Typ mit einem Versatz von 180° um die Drehachse (X) des beweglichen Organs (4) angeordnet sind, indem sie zwischen einem Paar gegenüberliegender Bereiche angeordnet sind, die einen Bereich (9) des ersten Typs und einen Bereich (9') des zweiten Typs umfassen.

10. Ventilmodul nach einem der Ansprüche 1 bis 9, **dadurch gekennzeichnet, dass** die Leitungsabschnitte an zwei benachbarten und zueinander senkrechten ebenen Flächen (60, 60'; 60'') des Rahmens (6) anliegen, wobei eine (60' oder 60") der beiden Flächen senkrecht zur Richtung der durch den Nocken (4) ausgeübten Quetschkraft und die andere (60) der Flächen senkrecht zur Richtung der Drehachse (X) verläuft.

11. Ventilmodul nach einem der Ansprüche 1 bis 10, **dadurch gekennzeichnet, dass** sich das oder jedes Paar Leitungsabschnitte (8, 8') zwischen den beiden Flügeln (6') des U-förmigen Rahmens (6) erstreckt und, vorzugsweise mit Blockierung im Bereich der Flügel (6'), im Rahmen (6) durch einziehbare oder abnehmbare Wände (61, 61') gehalten wird, die gegebenenfalls die Stützflächen (60', 60'') der Abschnitte (8, 8') bei ihrer Quetschung durch den Nocken (4) bereitstellen, dass jede der Wände (61, 61') durch ausgerichtete Schwenkverbindungen (63, 63') mit den beiden Flügeln (6') des Rahmens (6), vorzugsweise mit den oberen freien Enden der Flügel (6'), verbunden sind, wobei diese Wände (61, 61') bewegbar sind zwischen einerseits einer Eingriffsposition, in der sie gegen die Wiege (6") geklappt sind und in der die Leitungsabschnitte (8, 8') mit Blockierung zwischen den Flügeln und den Wänden gehalten werden, und andererseits einer gelösten Position, in der sie angehoben und von der Wiege beabstandet sind (6") und in der das Entfernen und Einsetzen der Leitungsabschnitte (8, 8') im Bereich der Wiege (6") möglich ist, und dass es mindestens ein abnehmbares Element (64) zur Verriegelung der Wände (61, 61') in der Position zur Blockierung der Leitungsabschnitte (8, 8') im Rahmen (6) umfasst, wobei das bzw. jedes Verriegelungselement (64) vorteilhafterweise aus einem Bügel besteht, der dazu ausgelegt ist, die gegen die Wiege (6") des Rahmens (6) geklappten Wände (61, 61') zu halten.

12. Ventilmodul nach einem der Ansprüche 1 bis 11, **dadurch gekennzeichnet, dass** der Mikro-Servomotor (2) an den Enden der Flügel (6') des U-förmigen Rahmens (6) befestigt ist, wobei die Leitungen, die die Abschnitte (8, 8') ausbilden, aus elastisch verformbaren Schläuchen bestehen, die für eine Verwendung in peristaltischen Pumpen geeignet sind.

13. Ventilmodul nach Anspruch 6, **dadurch gekennzeichnet, dass** die bzw. jede Steuerfläche (7, 7') zwei Bereiche (9) des ersten Typs aufweist, die in Umfangsrichtung durch zwei Bereiche (9') des zweiten Typs beabstandet sind, wobei diese verschiedenen Bereiche (9, 9') dazu angeordnet und ausgelegt sind, dass sie es ermöglichen, durch eine Drehung des Nockens (4) um 180° nacheinander Konfigurationen zum selektiven Verschließen eines der Leitungsabschnitte (8, 8'), zum gleichzeitigen Verschließen der beiden Leitungsabschnitte (8, 8') oder zum freien Durchgang im Bereich derselben zu erreichen.

14. Mehrweg-Fluidsteuereinheit (10) zur Steuerung der Zirkulation eines flüssigen oder gasförmigen Fluids in mindestens zwei Paaren von Zirkulationsleitungen (5, 5'), wobei die Leitungen (5 und 5') jedes Paars in voneinander abhängiger Weise gesteuert werden,
wobei die Einheit (10) **dadurch gekennzeichnet ist, dass** sie mindestens zwei Ventilmodule (1) nach einem der Ansprüche 1 bis 13 funktional integriert und dass sie aus mindestens zwei funktionellen Komponenten (2, 4) gebildet ist, die jeweils einen Mikro-Servomotor (2) umfassen, deren Ausgangswelle die Drehachse (X) des Nockens (4) antreibt oder dieser entspricht, der mindestens eine Steuerfläche (7, 7') aufweist, die unter Druck mit zwei Leitungsabschnitten (8, 8'), die die lokalen Segmente der Zirkulationsleitungen (5, 5') bilden, in Eingriff kommen kann, um ihren Durchgang durch Quetschung selektiv zu verschließen, wobei die verschiedenen Paare von Abschnitten (8, 8') in den verschiedenen Kammern (11) eines einzigen einteiligen oder zusammengesetzten Tragkörpers (6) montiert sind, der den verschiedenen angebrachten funktionalen Komponenten (2, 4) entsprechend unterteilt ist.

15. Automatisierte Vorrichtung (12) zur Herstellung von Mischungen aus flüssigen oder halbflüssigen Erzeugnissen, umfassend mindestens ein Mittel zum Ansaugen und/oder Ausstoßen von Gas(en) (13), mindestens zwei Behälter (14, 14', 14", 14‴), die verschiedene Grunderzeugnisse beinhalten, mindestens einen Behälter (15) zur Aufnahme der hergestellten Mischung, eine elektronische Steuereinheit (16) und eine Anordnung von Zirkulationsleitungen (5, 5', 17, 17') für flüssige und gasförmige Fluide, von Mitteln (18, 18') für den Fluidanschluss und von Mitteln (1, 10) zur Steuerung der Fluidzirkulation aus dem und in den mindestens einen Behälter (15),
Vorrichtung (12), **dadurch gekennzeichnet, dass** die Mittel zur Steuerung der Fluidzirkulation mindestens ein Ventilmodul (1) nach einem der Ansprüche 1 bis 13 und vorzugsweise mindestens eine Fluidsteuereinheit (10) nach Anspruch 14 umfassen, die durch die Steuereinheit (16) angesteuert wird und einen gesteuerten Fluidschalter oder -selektor bildet.

## Claims

1. Valve module (1) with an integrated electric actuator (2), said module comprising, on the one hand, a valve device (3) comprising a movable member (4), the positioning of which controls the circulation of a fluid in at least two circulation lines (5, 5') that pass through said valve device (3), and, on the other hand, an actuator (2) that is able and intended to move the rotary movable member (4) of the valve device (3) rotationally about an axis (X),
the valve device (3) comprising a support body (6) that houses said at least one movable member (4) mentioned above, which forms a cam that is guided in rotation and provided with at least one control surface (7, 7'), and also at least two conduit portions (8, 8') that form local segments of the circulation lines (5, 5'), these conduit portions (8, 8') and this movable member (4) being arranged and configured such that said at least one control surface (7, 7') can come into engagement with and modify, by way of local squeezing, the passage sections of said at least two conduit portions (8, 8'), specifically in a manner that is mutually differentiated and dependent on the rotational position of the movable member (4),
the valve module (1) being **characterized in that** the actuator (2) consists of a micro-servomotor mounted on the support body (6), the movable member (4) maintaining its rotational angular position when not actively acted upon by said micro-servomotor (2),
**in that** said device (1) is formed of two components that are assembled with one another, specifically a functional component formed by the micro-servomotor (2), the output shaft of which bears the member forming the rotary cam (4) and which has the one or more control surfaces (7, 7'), and a structural component formed by the support body (6) in the form of a U-shaped frame,
**in that** the micro-servomotor (2) is attached to the sides (6') of the U-shape, and
**in that** the conduit portions (8, 8') of said at least one pair of conduit portions have elastically deformable walls, are arranged on or housed in the base (6") of the U-shape, which forms a cradle, and each rest against at least one surface (60, 60', 60") that is perpendicular to the direction of the squeezing force exerted by the cam (4) when it comes into engagement with the conduit portion (8, 8') in question.

2. Valve module according to Claim 1, **characterized in that** the conduit portions (8, 8') are arranged in (one or more) pairs facing a control surface (7, 7'), preferably one on each side of the axis of rotation (X) of the movable member (4), and are mounted so as to be securely held and to extend rectilinearly into the support body (6).

3. Valve module according to Claim 1 or 2, **characterized in that** the squeezing stress selectively exerted by the or each control surface (7, 7'), preferably in the form of a circumferential strip, on the or each associated pair of conduit portions (8, 8'), in a manner dependent on the angular position of the movable member (4) forming the cam, is directed substantially radially and perpendicular to the axis of rotation (X) of the movable member (4).

4. Valve module according to any one of Claims 1 to 3, **characterized in that** the movable member (4) has a tiered and/or composite structure and has at least two control surfaces (7 and 7') that are mutually offset along the axis of rotation (X) of said movable member, each control surface (7, 7') acting on a distinct pair of associated conduit portions (8, 8').

5. Valve module according to Claim 4, **characterized in that** the various control surfaces (7, 7') of the movable member (4) have similar profiles and are angularly offset about the axis of rotation (X) of said movable member (4), for example by 0°, by 45°, by 90° or by 180°.

6. Valve module according to any one of Claims 1 to 5, **characterized in that** the or each control surface (7, 7') has, on the one hand, at least one region (9) of a first type, which is at the maximum distance from the axis of rotation (X), is preferably highly prominent or convex, and which, when positioned facing a conduit portion (8, 8'), results in maximum squeezing of the latter, preferably with the passage of the latter being occluded in full in a sealed manner, and, on the other hand, at least one region (9') of a second type, which is at the minimum distance from the axis of rotation (X), is preferably only slightly prominent or substantially planar, and which, when positioned facing a conduit portion (8, 8'), essentially causes no squeezing at all of the latter, these regions (9, 9') being offset about the axis of rotation (X) or situated opposite one another with respect to this axis (X).

7. Valve module according to Claim 6, **characterized in that** the or each control surface (7, 7') has one region (9) of the first type and one region (9') of the second type, these two regions (9 and 9') being offset by 180° about the axis of rotation (X) of the movable member (4) and the region (9) of the first type extending substantially over at least around 180° about the axis of rotation (X).

8. Valve module according to either one of Claims 6 and 7, **characterized in that** the region (9) of the first type and the region (9') of the second type are continuously connected by intermediate regions (9") of control surface (7, 7') that are at a progressively increasing or decreasing distance from the axis of rotation (X) depending on the direction of movement over the intermediate region (9") in question, specifically toward the region (9) of the first type or toward the region (9') of the second type.

9. Valve module according to Claim 6, **characterized in that** the or each control surface (7, 7') has three regions (9, 9') of one of the first and second types, and three regions or one region (9', 9) of the other of said first and second types, two regions (9) of the first type and/or two regions (9') of the second type being arranged with an offset of 180° about the axis of rotation (X) of the movable member (4) while being interposed between a pair of opposite regions comprising one region (9) of the first type and one region (9') of the second type.

10. Valve module according to any one of Claims 1 to 9, **characterized in that** the conduit portions rest against two adjacent and mutually perpendicular planar surfaces (60, 60'; 60") of said frame (6), one (60' or 60") of said surfaces being perpendicular to the direction of the squeezing force exerted by the cam (4) and the other (60) of said surfaces being perpendicular to the direction of the axis of rotation (X).

11. Valve module according to any one of Claims 1 to 10, **characterized in that** the or each pair of conduit portions (8, 8') extends between the two sides (6') of the U-shaped frame (6) and is held in said frame (6), preferably locked to the sides (6'), by retractable or removable walls (61, 61') that provide, as necessary, the bearing surfaces (60', 60") for said portions (8, 8') when the latter are being squeezed by the cam (4), **in that** each of the walls (61, 61') is connected by pivot joints (63, 63') in alignment with the two sides (6') of the frame (6), preferably with the free upper ends of said sides (6'), these walls (61, 61') being movable between, one the one hand, an engaged position in which the walls are folded down against the cradle (6") and in which the conduit portions (8, 8') are held in a locked manner between said sides and said walls and, on the other hand, a disengaged position in which the walls are raised and separated from the cradle (6") and that allows the conduit portions (8, 8') to be removed from and placed into the cradle (6"), and **in that** the valve module comprises a removable locking element (64) for locking the walls (61, 61') in a position in which the conduit portions (8, 8') are locked into the frame (6), the or each locking element (64) advantageously consisting of a clamp configured to keep the walls (61, 61') folded down against the cradle (6") of the frame (6) .

12. Valve module according to any one of Claims 1 to 11, **characterized in that** the micro-servomotor (2) is attached to the ends of the sides (6') of the U-shaped frame (6), the conduits forming the portions (8, 8') consisting of elastically deformable tubes suitable for use in peristaltic pumps.

13. Valve module according to Claim 6, **characterized in that** the or each control surface (7, 7') has two regions (9) of the first type that are circumferentially spaced apart by two regions (9') of the second type, these different regions (9, 9') being arranged and configured so as to allow a rotation of the cam (4) through 180° to successively result in configurations of selective occlusion of one of the conduit portions (8, 8'), of simultaneous occlusion of both of the conduit portions (8, 8') or of unimpeded passage through said conduit portions.

14. Multi-way fluidic control unit (10) for controlling the circulation of liquid or gaseous fluid in at least two pairs of circulation lines (5, 5'), the lines (5 and 5') of each pair being controlled in a mutually interdependent manner,
the unit (10) being **characterized in that** it functionally incorporates at least two valve modules (1) according to any one of Claims 1 to 13 and **in that** it is made up of at least two functional components (2, 4) each comprising a micro-servomotor (2), the output shaft of which drives the cam (4) or corresponds to the axis of rotation (X) thereof, said cam having at least one control surface (7, 7') that can come into pressing engagement with two conduit portions (8, 8') that form local segments of the circulation lines (5, 5'), with the aim of selectively locally occluding same by way of squeezing, these various pairs of portions (8, 8') being mounted in the various compartments (11) of a single one-piece or composite support body (6), which is compartmentalized in accordance with the various functional components (2, 4) added.

15. Automated device (12) for preparing mixtures of liquid or semi-liquid products, comprising at least one gas delivery and/or suction means (13), at least two reservoirs (14, 14', 14", 14‴) containing different base products, at least one receptacle (15) for collecting the prepared mixture, an electronic control unit (16) and an arrangement of circulation lines (5, 5', 17, 17') for circulating liquid and gaseous fluids, of fluidic connection means (18, 18') and of means (1, 10) for controlling the fluidic circulation from and to said at least one receptacle (15),
the device (12) being **characterized in that** the means for controlling the fluidic circulation comprise at least one valve module (1) according to any one of Claims 1 to 13, preferably at least one fluidic control unit (10) according to Claim 14, that is controlled by the control unit (16) and constitutes a controlled fluidic selector or a switch.
